Europäisches Patentamt

European Patent Office

Office européen des brevets

(19)

(11) Publication number: **0 072 879**

**A1**

# (12) EUROPEAN PATENT APPLICATION

(21) Application number: **81200930.6**

(22) Date of filing: **21.08.81**

(51) Int. Cl.$^3$: **F 02 M 13/08**
**F 02 B 69/04**

(43) Date of publication of application:
**02.03.83  Bulletin  83/9**

(84) Designated Contracting States:
**AT BE CH DE FR GB IT LI LU SE**

(71) Applicant: **Mattijssen, Christiaan Gerard Maria**
**Bonairestraat 8**
**NL-2612 GZ Delft(NL)**

(71) Applicant: **Kooy, Hendrik Meine**
**P. van Vlietlaan 55**
**NL-2285 XL Rijswijk (Z.H.)(NL)**

(72) Inventor: **Mattijssen, Christiaan Gerard Maria**
**Bonairestraat 8**
**NL-2612 GZ Delft(NL)**

(72) Inventor: **Kooy, Hendrik Meine**
**P. van Vlietlaan 55**
**NL-2285 XL Rijswijk (Z.H.)(NL)**

(74) Representative: **Noz, Franciscus Xaverius, Ir. et al,**
**Algemeen Octrooibureau P.O. Box 645**
**NL-5600 AP Eindhoven(NL)**

(54) Device for operating a combustion engine.

(57) Disclosed is a device for operating a combustion engine (7) on both petrol and LPG comprising a chamber (9) arranged in front of the gas valve and accommodating a valve (12) which can be adjusted during operation by the combustion air flow through the chamber for influencing the amount of petrol fed to the engine, whereby for LPG operation said valve can be fixed in a position in which the valve does not adversely affect the combustion air flow.

-1-

Device for operating a combustion engine.

The invention relates to a device for operating a combustion engine capable of running both on petrol and LPG, comprising a chamber arranged in front of the gas valve and accommodating a valve which can be adjusted during operation by the combustion air flow across the chamber for influencing the amount of petrol fed to the engine.

Such devices are generally known and in these devices a valve usually pivotally arranged in the chamber with the aid of a lever and located at the level of a passage matching the size of the valve actuates the petrol feeding mechanism, which may , if necessary, be fine-adjusted with the aid of an electronic, electric or analogous system. However, it has been found that in a device provided with such an air measuring valve undesirable phenomena may occur , when the combustion engine is fed by LPG, because during such travel the air measuring valve may perform random movements so that in the suction tube of the engine through which the LPG is fed highly diverging pressure differences may be involved, which adversely affect the quiet run of the engine and may even lead to backfiring of the engine and hence to serious damage to the air measuring valve.

The invention has for its object to provide a device of the kind set forth in which the invonceniences inherent in the known device can be eliminated in a simple manner.

According to the invention this can be achieved by fixing the valve in a position in which the valve does not adversely affect the combustion air flow prior to LPG operation.

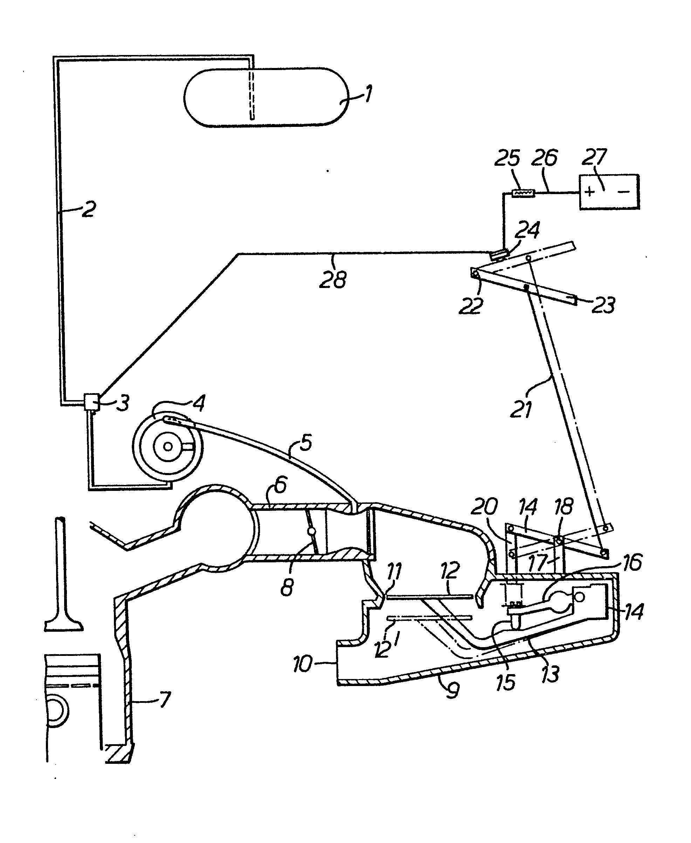

The invention will now be described more fully with reference to a device embodying the invention and schematically shown in the accompanying Figure.

As shown in the Figure, the device comprises an LPG tank 1, which is connected through a duct 2 including an electromagnetically controllable closing member 3 with a pressure regulator 4 of a type known per se. The pressure regulator 4 communicates through a duct 5 with the suction tube 6 of an engine 7, the suction tube 6 including a gas valve 8.

With the end of the scution tube 6 remote from the engine communicates a chamber 9 having an inlet opening 10 for the combustion air. The chamber has a passage 11 of a given size, in which a valve 12 is arranged, which is pivotally conneted with the aid of an arm 13 with a support 14 arranged in the chamber 9. On the lever arm 13 is furthermore bearing one end 15 of a pivotal lever 16, which is coupled in a manner not shown with a mechanism feeding petrol to the combustion engine.

The housing 9 is furthermore provided with a support 17, with which a lever 19 is coupled with the aid of a pivotal shaft 18. To one end of this lever is pivoted a push rod 20. The lower end of the push rod is located in the housing 9 above the end 15 of the lever 16. The other end of this lever is coupled with a coupling rod 21, which is pivoted to a control-lever 23 adapted to turn about a pivotal shaft 22. A micro -switch 24 is arranged near the control-lever 23 and connected by way of a lead 26 including a safety 25 with a current source 27 and through a lead 28 with the electromagnetic closing member 3.

When the combustion engine is running on petrol, the air metering valve 12 is freely movable in the chamber 9 and at an increase in speed and hence an increase in the amount of combustion air supplied through the opening 10 the valve 12 will release a larger part of the passage of the opening 11. As a result of this valve movement the mechanism feeding petrol will be acted upon through the lever 16 for increasing the supply of petrol. According to need the effect of this petrol feeding system or petrol injection system may be corrected or trimmed by electronic, mechanical, electric or analogous agency.

For a change-over to LPG the control-lever 23 is turned upwards out of the position indicated by solid lines into the position indicated by broken lines. As a result the micro-switch 24 is actuated so that the closing member 3 is opened and LPG can be fed through the pressure regulator 4 to the suction tube 6 of the engine 7.

By turning the control-lever 23 upwards, the push rod 7 is moved downwards and via the end 15 of the lever 16 it will urge down the air metering valve 12 into the position 12' indicated in the Figure by broken lines. Thus the air metering valve 12' is fixed in position in which this air metering valve 12' cannot in any way hinder the flow of combustion air through the passage 11. Consequently the supply of combustion air is only affected by the position of the gas valve 8, it being thus prevented that undesirable pressure fluctuations affecting the LPG supply through the duct 5 should occur in the suction tube 6.

Further advantages of the structure embodying the invention are that the entire system employed for supplying petrol to the combustion engine can remain ready for operation with all controls of pressure and temperature and of any electronic means so that the petrol feeding system will not be disturbed. Moreover the parts of the starting device, the choke and the warming-up device incorporated as normal standard in the car factory can remain in position during LPG operation.

Since by using the structure embodying the invention the pressure in the petrol feeding system can also be maintained, this pressure will invariably prevail in the injection pump frequently employed in these constructions so that this injection part will not be subject to wear due to the fact that the pressure in the injection pump may fall as well as the lubricating and/or damping effect of the petrol on parts of the injection pump. Nonetheless the change-over of the operation from LPG to petrol and conversely can be performed by a single manipulation without interruption of the engine operation.

-1-

CLAIMS

1.    A device for operating a combustion engine on both petrol and LPG comprising a chamber arranged in front of the gas valve and accomodating a valve which can be adjusted during operation by the combustion air flow through the chamber for influencing the amount of petrol fed to the engine characterized in that for LPG operation said valve can be fixed in a position in which the valve does not adversely affect the combustion air flow.

2.    A device as claimed in Claim 1 characterized in that for LPG operation the valve is moved away in a direction opposite the direction in which the valve is moved by the combustion air flow during petrol operation.

3.    A device as claimed in Claim 1 or 2 characterized in that the valve is adjusted with the aid of a control-lever, which actuates, in addition, a switch with the aid of which the closing member arranged between the engine and the LPG tank can be opened.

4.    A device as described above and/or as illustrated in the accompanying drawing.

**0072879**

Application number

EP 81 20 0930.6

**European Patent Office**

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | DE – A1 – 2 361 359 (MESSER GRIESHEIM) <br> * claim 1; page 4, line 3 to page 5, line 25; fig. * <br> — | 1,3 | F 02 M 13/08 <br> F 02 B 69/04 |
| A | H. GROHE "Otto- und Dieselmotoren" <br> 4th edition, chapter 7 "Gemisch-bildung" <br> 1979, VOGEL-VERLAG, Würzburg <br> pages 87 to 91 <br> * page 89, fig. 7.1.21a * <br> — | 1 | |
| | | | **TECHNICAL FIELDS SEARCHED (Int.Cl. 3)** |
| A | GB – A – 540 140 (SENTINEL WAGGON WORKS et al.) <br> * whole document * <br> — | | F 02 B 69/00 <br> F 02 D 19/00 <br> F 02 M 13/00 |
| A | FR – A – 640 937 (V. SCHOBBENS) <br> * page 4, lines 9 to 60; fig. 1, 2 * <br> ———— | | |
| | | | **CATEGORY OF CITED DOCUMENTS** <br> X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br> &: member of the same patent family, corresponding document |
| X | The present search report has been drawn up for all claims | | |
| Place of search <br> Berlin | Date of completion of the search <br> 02-03-1982 | Examiner <br> CANNICI | |

EPO Form 1503.1 06.78